# EUROPÄISCHE PATENTSCHRIFT

(11) **EP 4 484 055 B1**
(45) Veröffentlichungstag und Bekanntmachung des Hinweises auf die Patenterteilung: **24.12.2025**
(21) Anmeldenummer: 24193466.0
(22) Anmeldetag: 18.05.2020
(51) Int. Cl.: B24B 23/02, B25F 5/02, B25F 5/00

(54) **HANDWERKZEUGMASCHINE**
HAND-HELD POWER TOOL
MACHINE-OUTIL PORTATIVE

(30) Priorität: 29.05.2019 DE 102019207973
(43) Veröffentlichungstag der Anmeldung: 01.01.2025
(62) Teilanmeldung aus: 20726814.5
(73) Patentinhaber: Robert Bosch GmbH, 70442 Stuttgart (DE)
(72) Erfinder: Feder, Elmar, 71229 Leonberg (DE); Schneider, Dietmar, 73760 Ostfildern (DE); Lutz, Manfred, 70794 Filderstadt (DE)

(56) Entgegenhaltungen:
- EP-A2- 2 754 535
- WO-A1-2010/087235
- US-A1- 2017 361 416

## Beschreibung

Die Erfindung bezieht sich auf eine Handwerkzeugmaschine nach dem Oberbegriff des Anspruchs 1.

### Stand der Technik

In der DE 10 2015 221 682 A1 wird ein Motoradapter für eine Elektrowerkzeugmaschine offenbart, der zu einer geometrischen Anpassung eines Elektromotors an ein Motorgehäuse vorgesehen ist, mit einem Grundkörper, welcher einen Statoraufnahmebereich aufweist, der zumindest teilweise zu einer Aufnahme eines Stators des Elektromotors vorgesehen ist.

In der EP 2 754 535 A2 ist eine Handwerkzeugmaschine nach dem Oberbegriff des Anspruchs 1 beschrieben.

### Offenbarung der Erfindung

Der Erfindung liegt die Aufgabe zugrunde, mit einfachen konstruktiven Maßnahmen eine Handwerkzeugmaschine oder eine Handwerkzeugmaschinenvorrichtung zu verbessern.

Die Aufgabe wird gelöst mit einer Handwerkzeugmaschine nach Anspruch 1.

Vorteilhafte Ausführungen sind in den nachgeordneten Ansprüchen beansprucht.

Es wird vorgeschlagen, dass die Handwerkzeugmaschine eine Lufteinleitöffnung aufweist, welche dazu vorgesehen ist, einen Luftstrom derart zu leiten, dass ein Umfangsbereich der Antriebseinheit und/oder der Lagereinheit, insbesondere in axialer Richtung, umströmt wird.

Die Lufteinleitöffnung ist vorzugsweise dazu vorgesehen, den Luftstrom von dem Umfangsbereich der Antriebseinheit in die Lagereinheit zu leiten.

Insbesondere bildet der Umfangsbereich der Antriebsache und das Maschinengehäuse einen Luftströmungsraum, welcher dazu vorgesehen ist, einen Luftstrom entlang der Antriebseinheit zu führen. Vorzugsweise weist der Luftstromraum einen im Wesentlichen kreisringförmigen Querschnitt auf, welche um die Antriebseinheit herum verläuft. Der Luftströmungsraum kann dazu vorgesehen sein, den Luftstrom aufzunehmen. Hierdurch kann eine durch die Handwerkzeugmaschine strömende Kühlluftmenge vergrößert werden.

Ferner kann es zweckmäßig sein, dass die Lagereinheit, insbesondere das Lagergehäuse, die Antriebseinheit in Umfangsrichtung, insbesondere im Wesentlichen vollständig, umgibt und form- und/oder kraftschlüssig mit der Antriebseinheit verbunden ist.

Bevorzugt ist der Luftstrom dazu vorgesehen, die Antriebseinheit, insbesondere einen Antriebsstator, in axialer Richtung, insbesondere vollständig zu umströmen.

Insbesondere ist die Antriebseinheit derart in dem Maschinengehäuse angeordnet, dass ein Luftstrom eine Umfangsfläche bzw. eine Mantelfläche der Lagereinheit und/oder der Antriebseinheit umgibt bzw. umströmt.

Vorzugsweise ist die Lufteinleitöffnung dazu vorgesehen, den Luftstrom am Umfangsbereich entlang der Antriebseinheit zu leiten. Hierdurch kann sichergestellt werden, dass eine Luftstrommenge, welche dazu vorgesehen ist, durch die Handwerkzeugmaschine zu strömen, erhöht. Weiterhin wird eine verbesserte Luftführung und dadurch eine verbesserte Kühlung zumindest der Antriebseinheit ermöglicht.

Erfindungsgemäß ist die Lufteinleitöffnung dazu vorgesehen, einen Luftstrom in radialer Richtung aus einem Umfangsbereich der Antriebseinheit anzusaugen. Insbesondere wird der Luftstrom zu der Antriebswelle hin gerichtet geleitet. Unter "ansaugen" soll insbesondere verstanden werden, dass ein Luftstrom durch einen Unterdruck erzeugt wird.

Es kann zweckmäßig sein, dass die Antriebseinheit derart an dem Maschinengehäuse gelagert ist, dass ein Umfangsbereich der Antriebseinheit von einem Luftstrom, insbesondere in axialer Richtung, im Wesentlichen umströmbar ist. Die Antriebseinheit ist mittels einer Lagereinheit derart an dem Maschinengehäuse gelagert, dass die Antriebseinheit in einem von dem ersten Gehäuseteil, insbesondere der Getriebeeinheit, abgewandten Seite frei vorstehend ist bzw. keine Stützstruktur aufweist. Hierdurch kann ein Luftstrom besonders einfach und zuverlässig erzeugt werden, indem der Luftstrom ungehindert um die Antriebseinheit strömen kann.

Es kann zweckmäßig sein, dass die Lufteinleitöffnung von der Lagereinheit gebildet ist und sich insbesondere in Umfangsrichtung entlang der Lagereinheit erstreckt. Die Lufteinleitöffnung ist dazu vorgesehen, den Luftstrom in radialer Richtung zu leiten.

Ferner kann es zweckmäßig sein, dass die Luftleitöffnung an einem Umfangsbereich der Lagereinheit angeordnet ist und sich in Umfangsrichtung entlang der Lagereinheit erstreckt. Insbesondere ist die Lufteinleitöffnung dazu vorgesehen, den Luftstrom von einem Umfangsbereich der Lagereinheit, insbesondere dem Lagergehäuse, in radialer Richtung zur Antriebsachse hin zu leiten. Die Lufteinleitöffnung kann dazu vorgesehen sein, den Luftstrom durch die Lagereinheit, insbesondere das Lagergehäuse, hindurch zu leiten.

Weiterhin kann es zweckmäßig sein, dass die Handwerkzeugmaschine eine Getriebeeinheit aufweist, wobei die Lufteinleitöffnung in axialer Richtung zwischen der Getriebeeinheit und der Antriebseinheit, insbesondere einem Antriebsstator, angeordnet ist. Hierdurch kann der Luftstrom in axialer Richtung entlang der gesamten Länge der Antriebseinheit geleitet werden, um eine Antriebseinheit zu kühlen.

Es wird vorgeschlagen, dass die Handwerkzeugmaschine eine Luftleitscheibe, insbesondere mit einer Luftleitausnehmung, aufweist, welche dazu vorgesehen ist, den Luftstrom in axialer Richtung durch die Luftleitscheibe zu leiten. Die Luftleitscheibe ist als eine kreisringförmig Scheibe ausgebildet sein. Die Luftleitausnehmung kann in einem zentralen Bereich angeordnet sein. Des Weiteren kann es zweckmäßig sein, dass die Lufteinleitöffnung in axialer Richtung von einer/der Luftleitscheibe begrenzt ist. Insbesondere schließt die Luftleitscheibe in radialer Richtung an die Lagereinheit, insbesondere das Lagergehäuse, an. Vorzugsweise begrenzt die Luftleitscheibe die Luftleitöffnung in axialer Richtung. Bevorzugt ist die Luftleitscheibe in einem von dem Umfangsbereich der Lagereinheit abgewandten radial außenliegenden Bereich der Lagereinheit angeordnet. Weiter bevorzugt ist die Luftleitscheibe dazu vorgesehen, den Luftstrom in radialer Richtung zur Antriebsachse und in axialer Richtung entlang der Antriebsachse und an der Luftleitscheibe vorbei zu leiten.

Insbesondere ist die Luftleitscheibe zwischen dem Antriebsstator und der Lüftereinheit, insbesondere dem Lüfterradelement, angeordnet. Das Lüfterradelement ist vorzugsweise als ein Radiallüfter ausgebildet. Bevorzugt schließt die Luftleitscheibe in radialer Richtung an die Lagereinheit an. Weiter bevorzugt schließt die Luftleitscheibe in radialer Richtung an die Luftleitöffnung an. Ferner bevorzugt ist die Luftleitscheibe gegenüber der Antriebswelle, insbesondere in radialer Richtung, beabstandet, insbesondere derart beabstandet, dass der Luftstrom entlang der Antriebswelle durch die Luftleitscheibe geführt wird. Die Luftleitausnehmung nimmt insbesondere die Antriebswelle auf und bildet zwischen der Antriebswelle und der Luftleitausnehmung einen Luftdurchtritt für den Luftstrom. Insbesondere ist die Luftleitausnehmung dazu vorgesehen, den Luftstrom zwischen der Luftleitscheibe und der Antriebswelle in axialer Richtung zu leiten. Vorzugsweise ist die Luftleitscheibe dazu vorgesehen, einen Lüftungsquerschnitt zu reduzieren, um einen Unterdruck bzw. eine Strömungsgeschwindigkeit zu erhöhen. Dadurch kann auf besonders einfach Weise eine Strömungsgeschwindigkeit des Luftstroms erhöht werden.

Es wird ferner vorgeschlagen, dass die Lagereinheit die Antriebseinheit, insbesondere einen Stator der Antriebseinheit, vorzugsweise vollständig, umgibt. Insbesondere überdeckt bzw. überlappt die Lagereinheit die Antriebseinheit. Die Lagereinheit, insbesondere das Lagergehäuse, ist form- und/oder kraftschlüssig mit der Antriebseinheit, insbesondere dem Antriebsstator, verbunden.

Es wird weiter vorgeschlagen, dass die Antriebseinheit, insbesondere der Stator der Antriebseinheit, an einem Umfangsbereich bzw. an einer Mantelfläche einen Bereich aufweist, welcher nicht von der Lagereinheit, insbesondere dem Lagergehäuse, umgeben ist.

Die Lagereinheit kann ein weiteres bzw. zweites Lagergehäuse aufweisen. Das Lagergehäuse und das zweite Lagergehäuse können dazu vorgesehen sein, die Antriebseinheit zu lagern. Das Lagergehäuse und das zweite Lagergehäuse können dazu vorgesehen sein, die Antriebseinheit in axialer Richtung zu umgeben. Die Lagergehäuse können als Lagerdeckel bzw. als Lagerschilde ausgebildet sein. Das Lagergehäuse kann ein erstes Ende der Antriebseinheit aufnehmen und das zweite Lagergehäuse kann ein von dem ersten Ende abgewandtes zweites Ende aufnehmen. Die beiden Lagergehäuse umgreifen die Antriebseinheit, insbesondere den Antriebsstator, zumindest teilweise in axialer Richtung. Die beiden Lagergehäuse sind zueinander in axialer Richtung beabstandet. Das Lagergehäuse umgibt die Antriebseinheit in Umfangsrichtung an dem ersten Ende der Antriebseinheit. Das zweite Lagergehäuse umgibt die Antriebseinheit in Umfangsrichtung an dem ersten Ende der Antriebseinheit. Zwischen dem ersten und dem zweiten Lagergehäuse kann der Bereich ausgebildet sein, welcher insbesondere nicht von den beiden Lagergehäusen umgeben ist. Hierdurch kann eine verbesserte Kühlung der Antriebseinheit in einem Umfangsbereich der Antriebseinheit ermöglicht werden. Insbesondere bildet das Lagergehäuse ein erstes Lagergehäuse der Lagereinheit.

Es kann zweckmäßig sein, dass die Lagereinheit, insbesondere das Lagergehäuse, eine Luftausleitöffnung aufweist, welche dazu vorgesehen ist, den Luftstrom und/oder den weiteren Luftstrom aus der Lagereinheit heraus zu leiten. Insbesondere ist die Luftausleitöffnung in einem radialen Abschnitt der Lagereinheit angeordnet. Vorzugsweise ist die Luftausleitöffnung, insbesondere in Umfangsrichtung, durch eine Stützstruktur, insbesondere eine Stützrippe, begrenzt, welche einen radial innenliegenden Bereich der Lagereinheit, insbesondere Innenteilkörper, von einem radial außenliegenden Bereich der Lagereinheit, insbesondere Außenteilkörper, stützen. Die Luftausleitöffnung ist in radialer Richtung durch den Innenteilkörper und den Außenteilkörper begrenzt. Die Luftausleitöffnung ist in einer Umfangsrichtung um die Antriebsachse durch die Stützstruktur, insbesondere die Stützrippe begrenzt. Die Stützstruktur, insbesondere die Stützrippe, ist derart ausgestaltet, dass ein möglichst optimales Ausströmen des Luftstroms aus der Lagereinheit ermöglicht wird.

Ferner bevorzugt ist die Luftleitscheibe dazu vorgesehen, einen weiteren bzw. zweiten Luftstrom in den Luftstrom zu leiten und diese beiden Luftströme zu verbinden. Die Lufteinleitöffnung ist dazu vorgesehen, einen in die Handwerkzeugmaschine eintretenden Luftstrom in einen ersten Luftstrom und einen zweiten Luftstrom aufzuteilen. Der erste Luftstrom ist dazu vorgesehen, die Antriebseinheit zu umgeben bzw. zu umströmen. Der zweite Luftstrom ist dazu vorgesehen die Antriebseinheit zu durchströmen. Der erste Luftstrom kann an dem Umfangsbereich der Antriebseinheit und/oder Lagereinheit ausgebildet sein. Der zweite Luftstrom kann zwischen der Antriebswelle und dem Antriebsstator ausgebildet sein. Dadurch wird die Antriebseinheit sowohl innen als auch außen durchströmt bzw. umströmt. Zudem kann durch einen aufgeteilten Luftstrom sichergestellt werden, dass ein Teil des mit Schmutzpartikel und Metallstaub behafteten Luftstroms nicht durch den Motor geführt wird.

Insbesondere weist die Handwerkzeugmaschine eine zwischen dem Maschinengehäuse, insbesondere dem ersten Gehäuseteil, und der Lagerungseinheit, insbesondere dem Lagerungsgehäuse, eine Begrenzungswand auf, welche dazu vorgesehen ist, den Umfangsbereich, insbesondere in axialer Richtung, zu begrenzen. Insbesondere ist die Begrenzungswand dazu vorgesehen, den Umfangsbereich, insbesondere den Strömungsraum, in axialer Richtung gegenüber einem Luftdurchtritt, insbesondere mittels dem ersten Luftstrom, abzudichten. Die Begrenzungswand kann als eine, insbesondere in radialer Richtung nach innen abstehende, Gehäuseschulter ausgebildet sein. Die Begrenzungswand schließt vorzugsweise direkt an die Lagereinheit an.

### Kurze Beschreibung der Zeichnungen

Weitere Vorteile ergeben sich aus der folgenden Zeichnungsbeschreibung. In der Zeichnung sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Hierbei zeigt:
- Fig. 1: eine perspektivische Ansicht einer Handwerkzeugmaschine,
- Fig. 2 bis 3: jeweils ein Schnitt durch die Handwerkzeugmaschine aus Fig. 1,
- Fig. 4 bis 5: jeweils eine Ansicht auf eine Lagereinheit und eine Antriebseinheit der Handwerkzeugmaschine aus Fig. 1,
- Fig. 6 bis 7: jeweils ein Schnitt durch eine Lagereinheit und eine Antriebseinheit der Handwerkzeugmaschine aus Fig. 1 und
- Fig. 9 bis 10: jeweils eine Explosionsansicht der Handwerkzeugmaschine.

In den folgenden Figuren sind gleiche Bauteile mit den gleichen Bezugszeichen versehen.

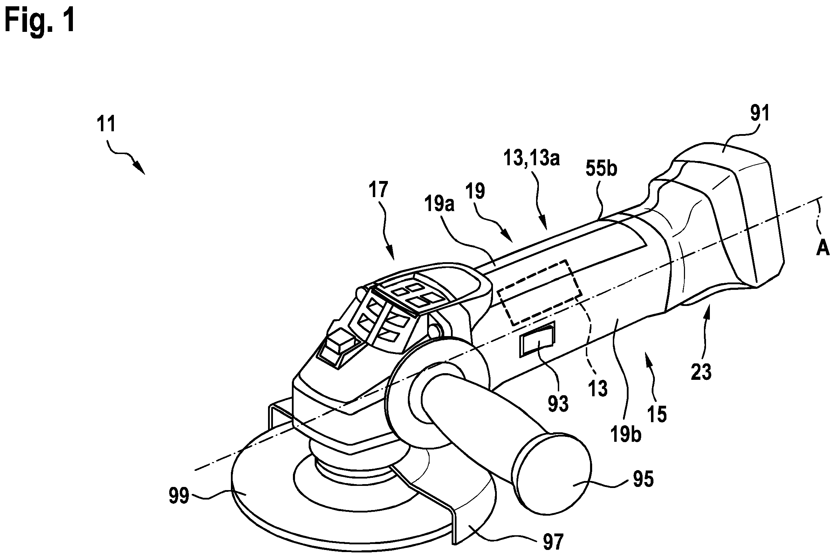

Fig. 1 zeigt eine als einen Winkelschleifer ausgebildete Handwerkzeugmaschine **11** mit einer Antriebseinheit 13, mit einem Maschinengehäuse 15 und mit einer Lagereinheit 25 zur Lagerung der Antriebseinheit 13. Das Maschinengehäuse 15 bildet ein Außengehäuse der Handwerkzeugmaschine 11. Das Maschinengehäuse 15 weist ein als Getriebegehäuse ausgebildetes erstes Gehäuseteil 17 und ein die Antriebseinheit 13 umgebendes zweites Gehäuseteil 19 auf. Das zweite Gehäuseteil 19 umgibt eine Getriebeeinheit 21 und ist aus einem Metall gebildet.

Das zweite Gehäuseteil 19 umgibt die Antriebseinheit 13 und umfasst einen Griffbereich 23 zum Umgreifen der Handwerkzeugmaschine 11. Das zweite Gehäuseteil 19 ist dazu vorgesehen, von einem Bediener umgriffen zu werden. Das zweite Gehäuseteil 19 ist aus zwei Gehäusehalbschalen 19a, 19b gebildet. Das zweite Gehäuseteil 19 weise ein erstes Ende auf, welches an das erste Gehäuseteil 17 anschließt und ein von dem ersten Ende abgewandtes zweites Ende, welches mit einer als ein Akkupack ausgebildeten Akkuvorrichtung 91 verbindbar ist. Das zweite Gehäuseteil 19 umfasst ferner ein als Ein-/AusSchalter ausgebildetes Betätigungselement 93 auf, welches dazu vorgesehen ist die Antriebseinheit ein-/aus-zuschalten. Ferner weist die Handwerkzeugmaschine **11** einen Zusatzhandgriff 95 und eine Schutzhaube 97 und ein von der Schutzhaube 97 zumindest teilweise umgebenes, als eine Schleifscheibe ausgebildetes Zubehörwerkzeug 99 auf.

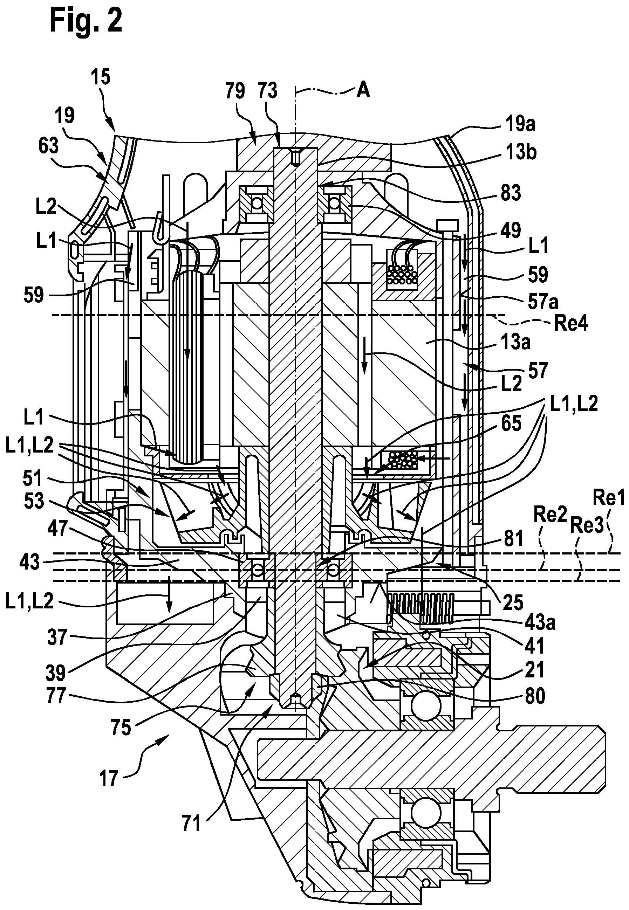

Die Handwerkzeugmaschine 11 weist eine Lagereinheit 25 mit einem Lagergehäuse 27 auf, welches im Wesentlichen im zweiten Gehäuseteil 19 angeordnet ist und dazu vorgesehen ist, in das erste Gehäuseteil 17 hineinzuragen. Das Lagergehäuse 27 ist in einem montierten Zustand der Handwerkzeugmaschine 11 teilweise in dem ersten Gehäuseteil 17 angeordnet ist. Dabei schneidet eine Radialebene Re1 der Antriebsachse A, welche entlang der Schnittstelle des ersten und des zweiten Gehäuseteils 19 verläuft, das Lagergehäuse 27 (Fig. 2). Das Lagergehäuse 27 ragt mindestens 10 mm in das erste Gehäuseteil 17 hinein.

Das Lagergehäuse 27 ist als ein Lagerdeckel bzw. als ein Lagerschild ausgebildet. Das Lagergehäuse 27 kann dazu vorgesehen sein, die Antriebseinheit 13, insbesondere in axialer und radialer Richtung der Antriebsachse A, gegenüber dem ersten und dem zweiten Gehäuseteil 19 zu lagern. Das Lagergehäuse 27 ist dazu vorgesehen, die Antriebseinheit 13 gegenüber der Getriebeeinheit 21 auszurichten bzw. zu positionieren. Das Lagergehäuse 27 ist formschlüssig mit dem Antriebsstator 13a verbunden.

Die Antriebseinheit 13 weist eine Antriebswelle 13b auf, welche dazu vorgesehen ist, sich entlang einer Antriebsachse A zu erstrecken und um die Antriebsachse A zu drehen. Die Antriebswelle 13b kann einen Antriebsrotor 13b bilden. Die Antriebseinheit 13 weist einen Antriebsstator 13a auf, welcher drehfest gegenüber dem zweiten Gehäuseteil 19 gelagert ist. Die Handwerkzeugmaschine 11 erstreckt sich im Wesentlichen entlang der Antriebsachse A.

Das erste Gehäuseteil 17 und das zweite Gehäuseteil 19 überlappen das Lagergehäuse 27 in axialer Richtung entlang der Antriebsachse A. Das Lagergehäuse 27 ist innenliegend, d.h. vollständig von dem Maschinengehäuse 15 umgeben. Das Lagergehäuse 27 ist zwischen dem ersten Gehäuseteil 17 und dem zweiten Gehäuseteil 19 angeordnet und in axialer Richtung entlang der Antriebsachse A gegenüber dem ersten Gehäuseteil 17 und dem zweiten Gehäuseteil 19 vorgespannt. Das Lagergehäuse 27 ist topfförmig ausgebildet und umgibt teilweise den Antriebsstator 13a.

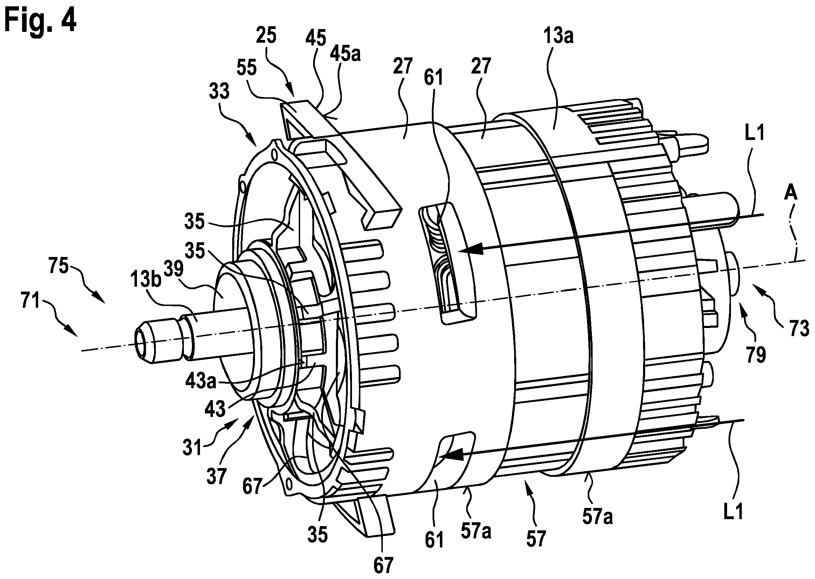

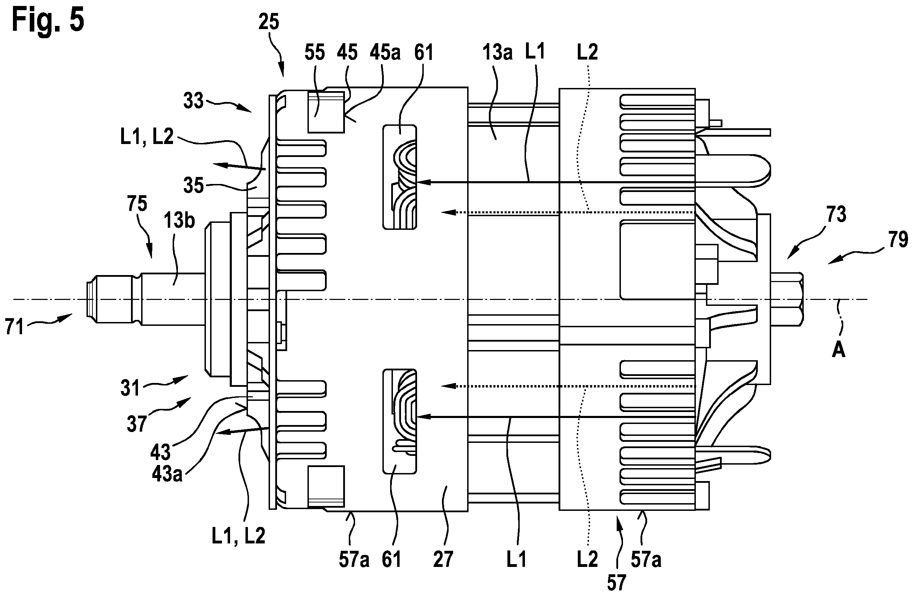

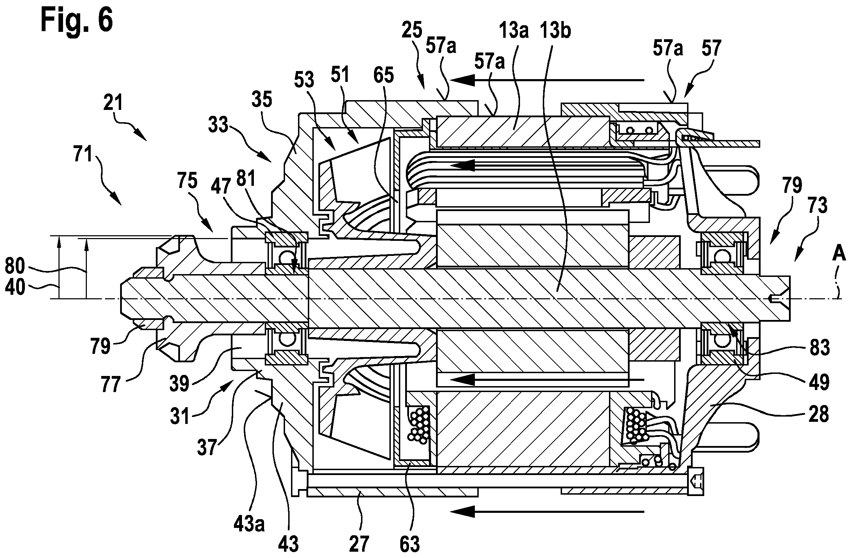

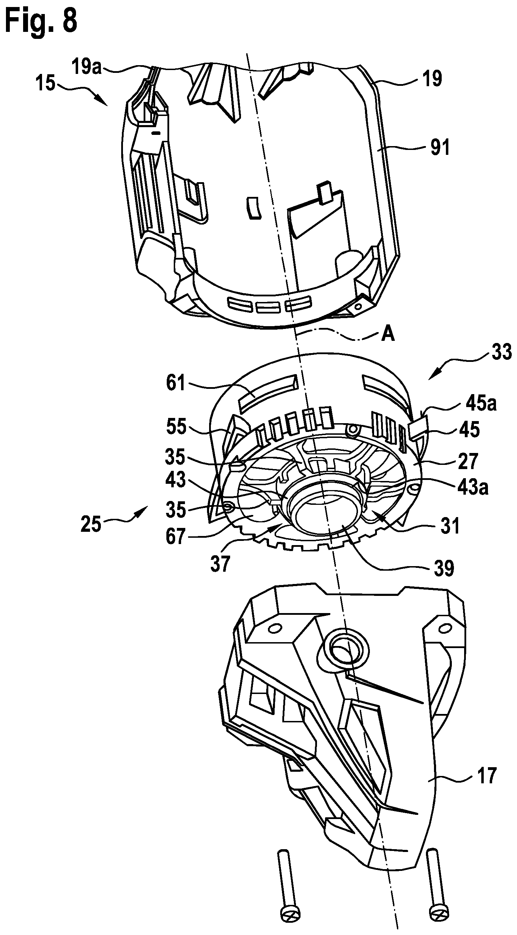

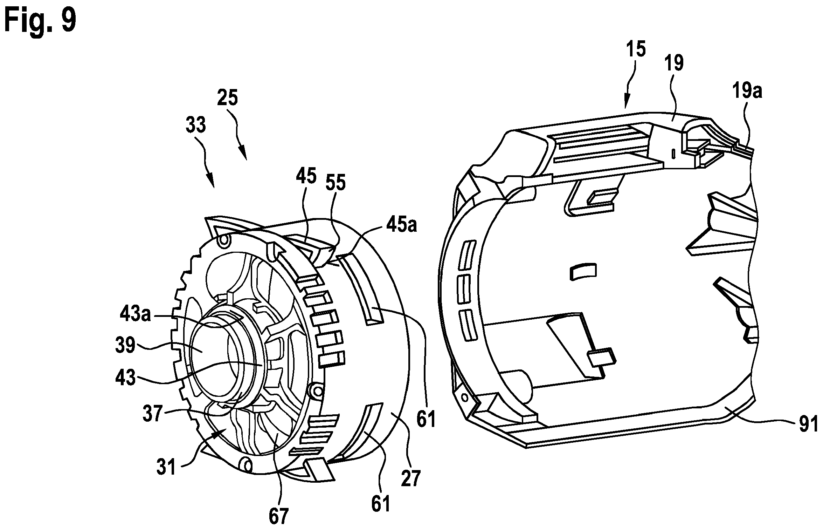

Das Lagergehäuse 27 ist dazu vorgesehen, sich in axialer Richtung in einem radial innenliegenden Bereich 31 an dem ersten Gehäuseteil 17 und in einem radial außenliegenden Bereich 33 an dem zweiten Gehäuseteil 19 abzustützen. Das Lagergehäuse 27 weist einen radial innenliegenden Bereich, 31 welcher einen Innenteilkörper bildet, und einen radial außenliegenden Bereich 33, welcher einen Außenteilkörper bildet, auf (Fig. 4 bis 9). Die Bereiche sind im Wesentlichen hohlzylindrisch ausgebildet. Der Innenteilkörper ist mit dem Außenteilkörper durch mehreren sich in radialer Richtung erstreckende Stützrippen 35 verbunden, welche eine Stützstruktur 35 bilden.

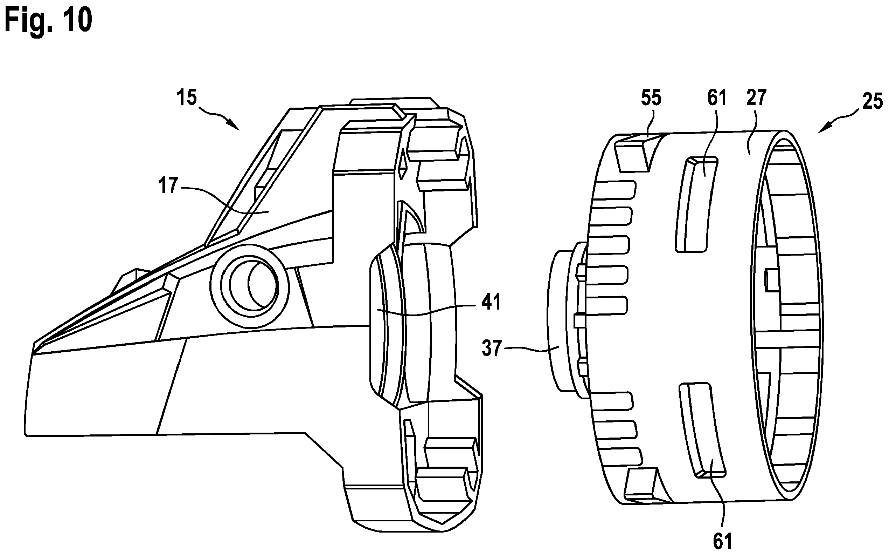

Das Lagergehäuse 27 weist ein Zentrierelement 37 auf, welches durch den Innenteilkörper gebildet ist. Das Zentrierelement 37 ist im Wesentlichen hohlzylindrisch ausgebildet und ragt in das erste Gehäuseteil 17 hinein, um eine Zentrierung des Lagergehäuses 27 mit dem ersten Gehäuseteil 17 zu bilden. Das Zentrierelement 37 weist eine im Wesentlichen zylindrische Lagerausnehmung 39 auf, welche eine radiale Erstreckung des Lagergehäuses 27 begrenzt (Fig. 10). Die Lagerausnehmung 39 ist dazu vorgesehen, eine Antriebswelle 13b der Antriebseinheit 13 aufzunehmen und diese zu umgeben.

Das erste Gehäuseteil 17 ist dazu vorgesehen, das Lagergehäuse 27 in radialer Richtung der Antriebsachse A zu zentrieren. Das erste Gehäuseteil 17 weist eine Zentrierausnehmung 41 auf, welche dazu vorgesehen ist, das Zentrierelement 37 des Lagergehäuses 27 zu zentrieren (Fig. 2). Die Zentrierausnehmung 41 ist dazu vorgesehen, das Zentrierelement 37 aufzunehmen, wobei das Zentrierelement 37 eine in Umfangsrichtung des Zentrierelements 37 umlaufende Zentrierfase aufweist, welche dazu vorgesehen ist, das Zentrierelement 37 in die Zentrierausnehmung 41 des ersten Gehäuseteils 17 zu führen.

Das Lagergehäuse 27 weist ein erstes Anschlagselement 43 auf, welches dazu vorgesehen ist, einen axialen Anschlag mit dem ersten Gehäuseteil 17 zu bilden. Das erste Anschlagselement 43 ist an dem Innenteilkörper angeordnet und als eine Anschlagschulter ausgebildet. Das erste Anschlagselement 43 weist eine kreisringförmige Anschlagsfläche 43a auf. Das erste Anschlagselement 43 ist dazu vorgesehen, einen Anschlag mit dem Inneren des ersten Gehäuseteils 17 zu bilden. Das erste Anschlagselement 43 ist radial innenliegend angeordnet. Das erste Anschlagselement 43 ist dazu vorgesehen, einen Abstand der Lagereinheit 25 und somit der Antriebseinheit 13 gegenüber der Getriebeeinheit 21 festzulegen. Das erste Anschlagselement 43 schließt in radialer Richtung an das Zentrierelement 37 an und begrenzt dieses.

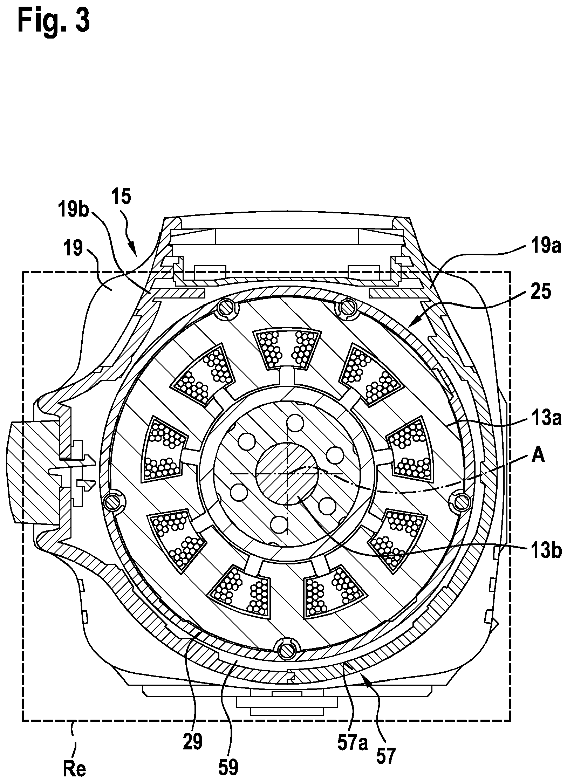

Das Lagergehäuse 27 und die Antriebseinheit 13 sind gegenüber dem Maschinengehäuse 15 bzw. dem zweiten Gehäuseteil 19 fliegend gelagert. Das Lagergehäuse 27 und die Antriebseinheit 13 in einer gegenüber dem ersten Gehäuseteil 17 abgewandten Seite fliegend gelagert. Die Lagereinheit 25 und die Antriebseinheit 13 sind derart an dem Maschinengehäuse 15 gelagert, dass die Antriebseinheit 13 ein festes Ende und ein von dem festen Ende abgewandtes fliegende bzw. freies Ende aufweist. Die Lagereinheit 25 und/oder die Antriebseinheit 13 weisen an einer von dem ersten Gehäuseteil 17 abgewandten Seite keine Stützstruktur 35 auf, welche die Antriebseinheit 13 gegenüber dem zweiten Gehäuseteil 19 abstützt. Die Lagereinheit 25 und die Antriebseinheit 13 ragen an einer von dem ersten Gehäuseteil 17 abgewandten Seite in das zweite Gehäuseteil 19 hinein. Die Lagereinheit 25 und die Antriebseinheit 13 sind an dem freien Ende in radialer Richtung der Antriebsachse A beabstandet zu dem zweiten Gehäuseteil 19 ausgebildet. Dabei schneidet eine Radialebene Re4 der Antriebsachse A, welche durch ein weiteres bzw. zweites Lagergehäuse 19 verläuft, den Antriebsstator der Antriebseinheit 13 und das zweite Gehäuseteil 19 (Fig. 3).

Das Lagergehäuse 27 ist dazu vorgesehen, die Antriebseinheit 13 samt der Antriebswelle 13b mittels einer Fest-Los-Lagerung zu lagern. Die Lagereinheit 25 ist dazu vorgesehen, die Antriebseinheit 13 als ein geschlossenes System aufzunehmen, sodass die Lagereinheit 25 ohne einer weiteren Lagerung mittels einem weiteren Lagerungselement in dem Maschinengehäuse 15 gelagert ist.

Die Lagereinheit 25 weist ein als ein Wälzlagerungselement ausgebildetes erstes Lagerungselement 47 auf, welches dazu vorgesehen ist, die Antriebswelle 13b zu lagern. Das erste Lagerungselement 47 ist zwischen einer Getriebeeinheit 21 und dem Antriebsstator 13a angeordnet und dazu vorgesehen, die Antriebswelle 13b zu lagern. Eine Radialebene Re2 der Antriebsachse A, welche durch das erste Lagerungselement 47 verläuft, schneidet das erste Gehäuseteil 17 und das Lagergehäuse 27 der Lagereinheit 25 (Fig. 2).

Das erste Lagerungselement 47 ist durch das Lagergehäuse 27 von dem ersten Gehäuseteil 17 getrennt und beabstandet zu dem ersten Gehäuseteil 17, 19 angeordnet. Das erste Lagerungselement 47 ist in der Zentrierausnehmung 41 des ersten Gehäuseteils 17 angeordnet und von dem ersten Gehäuseteil 17 teilweise umgeben. Das erste Lagerungselement 47 ist in der Lagerausnehmung 39 des ersten Gehäuseteils 17 angeordnet. Eine Radialebene Re2 der Antriebsachse A, welche durch das erste Lagerungselement 47 verläuft, schneidet das erste Gehäuseteil 17, das Lagergehäuse 27 der Lagereinheit 25 und die Zentrierausnehmung 41 des ersten Gehäuseteils 17 und die Lagerausnehmung 39 des Lagergehäuses 27. Das erste Lagerungselement 47 ist von dem ersten Gehäuseteil 41 vollständig umgeben. Das erste Lagerungselement 47 ist in axialer Richtung von dem Lagergehäuse 27 der Lagereinheit 25 vollständig umgeben und das Lagergehäuse 27 ist in axialer Richtung von dem ersten Gehäuseteil 17 teilweise umgeben. Das Lagergehäuse 27 ist dabei aus einem Kunststoff gebildet. Das Lagergehäuse 27 ist dazu vorgesehen, das erste Lagerungselement 47 gegenüber der Getriebeeinheit 21 zu positionieren. Das erste Lagerungselement 47 ist von dem Lagergehäuse 27 umspritzt und formschlüssig und/oder stoffschlüssig mit dem Lagergehäuse 27 verbunden. Das erste Lagerungselement 47 bildet ein Festlager. Das erste Lagerungselement 47 ist zumindest im Wesentlichen im ersten Gehäuseteil 17 angeordnet.

Das erste Lagerungselement 47 ragt in axialer Richtung gegenüber dem ersten Anschlagselement 43 weiter in das erste Gehäuseteil 17 hinein und steht gegenüber dem Anschlagselemente 43 hervor. Eine Radialebene Re3 der Antriebsachse A, welche entlang dem ersten Anschlag verläuft, schneidet das erste Gehäuseteil 17 und das erste Anschlagselement 43.

Die Handwerkzeugmaschine **11** weist eine Lüftereinheit 51 auf, welche in axialer Richtung zwischen dem ersten Lagerungselement 47 und dem Antriebsstator 13a angeordnet ist. Die Lüftereinheit 51 weist ein Lüfterradelement 53 auf, welches dazu vorgesehen ist, einen Luftstrom L1 zu bilden. Das Lagergehäuse 27 umgibt das Lüfterradelement 53 in axialer Richtung vollständig.

Das Lagergehäuse 27 weist ein als eine Erhebung 55 ausgebildetes Formschlusselement 55 auf, welches dazu vorgesehen ist, die Lagereinheit 25 gegenüber dem zweiten Gehäuseteil 19 zu halten (Fig. 4). Die Erhebung 55 ist dazu vorgesehen, eine Bewegung des Lagergehäuses 27 gegenüber dem zweiten Gehäuseteil 19 in Umfangsrichtung um die Antriebsachse A zu sichern. Die Erhebung 55 ist dazu vorgesehen, eine Drehsicherung des Lagergehäuses 27 zu bilden. Die Erhebung 55 ist als eine radiale Erhöhung ausgebildet, welche in radialer Richtung absteht. Die Erhebung 55 begrenzt eine radiale Erstreckung des Lagergehäuses 27. Vorzugsweise sind vier Erhebungen 55 vorgesehen. Die Erhebungen 55 können in Umfangsrichtung zumindest um 40° voneinander beabstandet sein. Jeweils zwei Erhebungen 55 sind an zueinander abgewandten Seiten des Lagergehäuses 27 angeordnet.

Das Lagergehäuse 27 weist ein zweites Anschlagselement 45 auf. Das zweite Anschlagselement 45 ist dazu vorgesehen, einen axialen Anschlag mit dem zweiten Gehäuseteil 19 zu bilden. Das zweite Anschlagselement 45 ist als eine Anschlagschulter ausgebildet und in einem radial außenliegenden Bereich 33 des Lagergehäuses 27 angeordnet. Das zweite Anschlagselement 45 ist als eine Anschlagschulter ausgebildet. Das zweite Anschlagselement 45 weist eine Anschlagsfläche 45a auf, welche senkrecht zu einer axialen Richtung verläuft. Das zweite Anschlagselement 45 ist dazu vorgesehen, einen Anschlag mit dem Inneren des zweiten Gehäuseteils 19 zu bilden. Das zweite Anschlagselement 45 ist dazu vorgesehen, die Lagereinheit 25 in axialer Richtung zu verspannen. Die zweite Anschlagsfläche 45a ist von der ersten Anschlagsfläche 43a abgewandt. Das Lagergehäuse 17 weist beide Anschlagselement 43, 45 auf.

Die Erhebung 55 und das zweite Anschlagselement 45 sind einstückig ausgebildet. Die Erhebungen 55 sind mittels einer Schraubverbindung in axialer Richtung vorgespannt. Das erste und das zweite Gehäuseteil 19 werden mittels einer Schraubverbindung in axialer Richtung verbunden. Das Lagergehäuse 27 und insbesondere das erste und zweite Anschlagselement 45 sind durch die Schraubverbindung zwischen dem ersten Gehäuseteil 17 und dem zweiten Gehäuseteil 19 in axialer Richtung vorgespannt.

Die Antriebseinheit 13 und die Lagereinheit weisen an einer von dem ersten Gehäuseteil 17 abgewandten Seite einen Umfangsbereich 57 auf, welcher von einem Luftstrom L1 umströmbar ist. Die Antriebseinheit 13 ist derart in dem Maschinengehäuse 15 angeordnet bzw. gelagert, dass die Antriebseinheit 13 in einem von dem ersten Gehäuseteil 17 abgewandten Bereich in Umfangsrichtung zumindest im Wesentlichen beabstandet zu dem zweiten Gehäuseteil 19 angeordnet ist. Der Umfangsbereich 57 ist an einer von dem ersten Gehäuseteil 17 abgewandten Seite der Antriebseinheit 13 angeordnet.

Der Umfangsbereich 57 der Antriebseinheit 13 bzw. der Lagereinheit 27 und das Maschinengehäuse 15 bilden einen Luftströmungsraum 59, welcher dazu vorgesehen ist, einen Luftstrom L1 im Wesentlichen entlang der Antriebseinheit 13 zu führen. Der Luftströmungsraum 59 weist einen im Wesentlichen kreisringförmigen Querschnitt auf, welche um die Antriebseinheit 13 herum verläuft.

Die Lagereinheit 25 umgibt die Antriebseinheit 13 in Umfangsrichtung im Wesentlichen vollständig und ist form- und/oder kraftschlüssig mit der Antriebseinheit 13 verbunden.

Die Lufteinleitöffnung 61 ist dazu vorgesehen, einen Luftstrom L1 derart zu leiten, dass ein Umfangsbereich 57 der Antriebseinheit 13 bzw. des Lagergehäuses 27 in axialer Richtung umströmt wird. Die Lufteinleitöffnung 61 ist dazu vorgesehen, den Luftstrom L1 von dem Umfangsbereich 57 des Lagergehäuses 27 in ein Inneres bzw. in einen Innenbereich des Lagergehäuses 27 zu leiten. Der Luftstrom L1 ist dazu vorgesehen, den Antriebsstator 13a in axialer Richtung, insbesondere vollständig zu umströmen. Die Antriebseinheit 13 ist derart in dem Maschinengehäuse 15 angeordnet, dass der Luftstrom L1 eine Umfangsfläche 57a der Lagereinheit 25 und der Antriebseinheit 13 umgibt bzw. umströmt.

Die Antriebseinheit 13 ist derart an dem Maschinengehäuse 15 gelagert ist, dass ein Umfangsbereich 57 der Antriebseinheit 13 von einem Luftstrom L1 in axialer Richtung, im Wesentlichen umströmbar ist. Die Antriebseinheit 13 ist mittels einer Lagereinheit 25 derart an dem Maschinengehäuse 15 gelagert, dass die Antriebseinheit 13 in einem von der Getriebeeinheit 21 abgewandeten Seite frei vorstehend ist bzw. keine Stützstruktur 35 aufweist.

Die Lufteinleitöffnung 61 ist von dem Lagergehäuse 27 gebildet und erstreckt sich in Umfangsrichtung entlang dem Lagergehäuse 27. Die Lufteinleitöffnung 61 ist dazu vorgesehen, den Luftstrom L1 in radialer Richtung zu leiten. Die Luftleitöffnung ist an einem Umfangsbereich 57 der Lagereinheit 25 und erstreckt sich in Umfangsrichtung entlang der Lagereinheit 25. Die Lufteinleitöffnung 61 ist dazu vorgesehen, den Luftstrom L1 von einem Umfangsbereich 57 des Lagergehäuses 27 in radialer Richtung zur Antriebsachse A hin zu leiten. Die Lufteinleitöffnung 61 ist dazu vorgesehen, den Luftstrom L1 durch das Lagergehäuse 27 hindurch zu leiten.

Die Lufteinleitöffnung 61 ist in axialer Richtung zwischen der Getriebeeinheit 21 und dem Antriebsstator 13a angeordnet.

Die Handwerkzeugmaschine 11 weist eine Luftleitscheibe 63 mit einer Luftleitausnehmung 65 auf, welche dazu vorgesehen ist, den Luftstrom L1 in axialer Richtung durch die Luftleitscheibe 63 zu leiten. Die Luftleitscheibe 63 ist als eine kreisringförmig Scheibe ausgebildet. Die Luftleitausnehmung 65 ist in einem zentralen Bereich angeordnet. Die Lufteinleitöffnung 61 ist in axialer Richtung von einer/der Luftleitscheibe 63 begrenzt. Die Luftleitscheibe 63 schließt in radialer Richtung an das Lagergehäuse 27 an. Die Luftleitscheibe 63 begrenzt die Luftleitöffnung in axialer Richtung. Die Luftleitscheibe 63 ist in einem von dem Umfangsbereich 57 der Lagereinheit 25 abgewandten radial außenliegenden Bereich 33 der Lagereinheit 25 angeordnet. Die Luftleitscheibe 63 ist dazu vorgesehen, den Luftstrom L1 in radialer Richtung zur Antriebsachse A und in axialer Richtung entlang der Antriebsachse A und an der Luftleitscheibe 63 vorbei zu leiten.

Die Luftleitscheibe 63 ist zwischen dem Antriebsstator 13a und dem Lüfterradelement 53 angeordnet. Das Lüfterradelement 53 ist als ein Radiallüfter ausgebildet. Die Luftleitscheibe 63 schließt in radialer Richtung an die Lagereinheit 25 und an die Luftleitöffnung an. Die Luftleitscheibe 63 ist gegenüber der Antriebswelle 13b derart beabstandet, dass der Luftstrom L1 entlang der Antriebswelle 13b durch die Luftleitscheibe 63 geführt wird. Die Luftleitausnehmung 65 nimmt die Antriebswelle 13b auf und bildet zwischen der Antriebswelle 13b und der Luftleitausnehmung 65 einen Luftdruchtritt für den Luftstrom L1. Die Luftleitausnehmung 65 ist dazu vorgesehen, den Luftstrom L1, L2 zwischen der Luftleitscheibe 63 und der Antriebswelle 13b in axialer Richtung zu leiten.

Die Antriebseinheit 13, insbesondere der Antriebsstator 13a, weist an einem Umfangsbereich 57 bzw. an einer Mantelfläche einen Bereich auf, welcher nicht von dem Lagergehäuse 27 umgeben ist.

Das Lagergehäuse 27 weist eine Luftausleitöffnung 65 auf, welche dazu vorgesehen ist, den Luftstrom L1 aus der Lagereinheit 25 heraus zu leiten. Die Luftausleitöffnung 67 ist in einem radialen Abschnitt der Lagereinheit 25 angeordnet. Die Luftausleitöffnung 67 ist in Umfangsrichtung durch eine Stützstruktur 35, insbesondere eine Stützrippe, begrenzt, welche einen radial innenliegenden Bereich 31 der Lagereinheit 25, insbesondere Innenteilkörper, von einem radial außenliegenden Bereich 33 der Lagereinheit 25, insbesondere Außenteilkörper, stützen. Die Luftausleitöffnung 67 ist in radialer Richtung durch den Innenteilkörper, den Außenteilkörper und in einer Umfangsrichtung um die Antriebsachse A durch die Stützrippen 35 begrenzt. Die Stützrippen 35 sind derart ausgestaltet, dass ein möglichst optimales Ausströmen des Luftstroms L1 aus der Lagereinheit 25 ermöglicht wird.

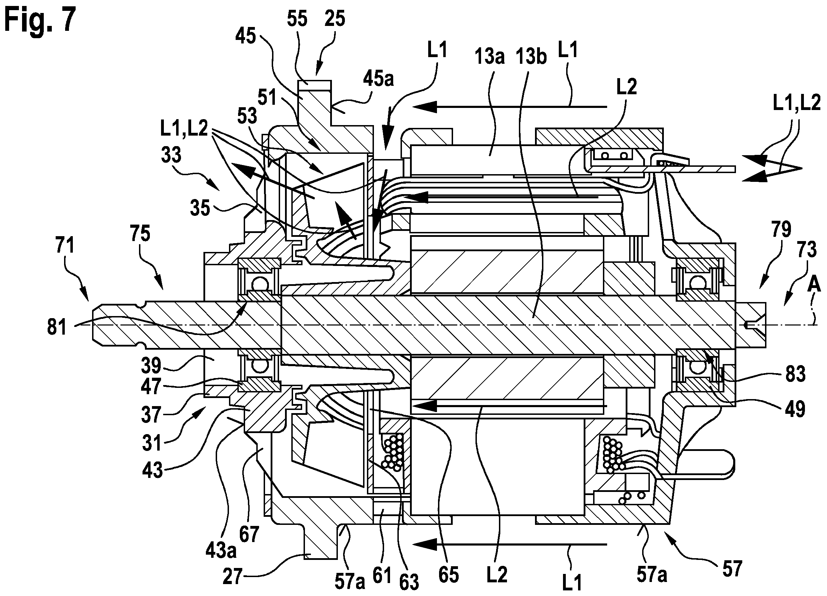

Die Luftleitscheibe 63 ist dazu vorgesehen, einen weiteren Luftstrom L2 in den Luftstrom L1 zu leiten und diese zu verbinden. Die Lufteinleitöffnung 61 ist dazu vorgesehen, einen in die Handwerkzeugmaschine 11 eintretenden Luftstrom L1, L2 in einen ersten Luftstrom L1 und einen zweiten Luftstrom L2 aufzuteilen. Der erste Luftstrom L1 ist dazu vorgesehen, die Antriebseinheit 13 zu umgeben bzw. zu umströmen. Der zweite Luftstrom L2 ist dazu vorgesehen die Antriebseinheit 13 zu durchströmen. Der erste Luftstrom L1 ist um den Umfangsbereich 57 der Antriebseinheit 13 ausgebildet. Der zweite Luftstrom L2 ist zwischen der Antriebswelle 13b und dem Antriebsstator 13a ausgebildet (Fig. 7).

Das erste Gehäuseteil 17 weist eine Begrenzungswand 19 auf, welche zwischen dem ersten Gehäuseteil 17 und dem Lagergehäuse 27 angeordnet ist. Die Begrenzungswand 91 begrenzt den Umfangsbereich 57 in axialer Richtung. Die Begrenzungswand 91 ist dazu vorgesehen, den als Strömungsraum 59 ausgebildeten Umfangsbereich 57 in axialer Richtung gegenüber einem Luftdurchtritt mittels dem ersten Luftstrom L1 abzudichten. Die Begrenzungswand 91 ist als eine in radialer Richtung nach innen abstehende Gehäuseschulter ausgebildet. Die Begrenzungswand 91 schließt vorzugsweise direkt an das Lagergehäuse 27 an.

Die Handwerkzeugmaschine 11 umfasst ferner eine Handwerkzeugmaschinevorrichtung, welche eine geschlossenes Antriebseinheitlagerung bildet. Die Handwerkzeugmaschinenvorrichtung ist als ein geschlossenes Antriebssystem ausgebildet. Die Handwerkzeugmaschinenvorrichtung ist durch die Antriebseinheit 13 mit der Antriebswelle 13b und durch die Lagereinheit 25 zur Lagerung der Antriebseinheit 13 gebildet.

Die Antriebswelle 13b weist ein erstes Ende 71 mit einem Aufnahmebereich 75 zur Aufnahme eines Getriebeelements 77 und mit einem Gewindeelement 80 zur Verbindung des Getriebeelements 77 und ein von dem ersten Ende 71 abgewandtes zweites Ende 73 auf. Das zweite Ende 71 weist einen Drehmomentaufnahmebereich 79 zur Verbindung des Getriebeelements 77 auf.

Der Drehmomentaufnahmebereich 79 ist dazu vorgesehen, in einem Montagezustand ein Drehmoment auf die Antriebswelle 13b aufzubringen bzw. einem auf die Antriebswelle 13b aufgebrachtem Drehmoment ein Gegendrehmoment zu bilden.

Das Gewindeelement 80 ist mittels einer als Wellenmutter ausgebildeten Schraubverbindung mit der Antriebswelle 13b lösbar verbindbar.

Das erste Lagergehäuse 27 umgibt die Antriebseinheit 13 die Antriebswelle 13b an dem ersten Ende 71.

Die Lagerausnehmung 39 weist eine radiale Erstreckung 40 auf, welche um mindestens 3 % kleiner ist, als eine radiale Erstreckung 80 des Gewindeelements 79, sodass eine Montage des Getriebeelements 77 erst dann erfolgen kann, wenn das erste Lagergehäuse 27 mit der Antriebseinheit 13 verbunden ist. Um einem Drehmoment, welches bei einer Schraubverbindung entsteht, entgegenwirken zu können, ist der abstehende Drehmomentaufnahmebereich am zweiten Ende 73 der Antriebswelle 13b vorgesehen. Insbesondere weist die Lagerausnehmung 39 gegenüber einem maximalen Durchmesser des Gewindeelements 79 einen kleineren Durchmesser auf.

Die Lagerausnehmung 39 umgibt eine erste Lageraufnahme 81 umgibt, welche dazu vorgesehen ist, das erstes Lagerungselement 47 zu einer Lagerung der Antriebswelle 13b aufzunehmen. Das erste Lagerungselement 47 ist dabei kraftund/oder formschlüssig mit ersten Lagergehäuse 27 verbunden. Das erste Lagerungselement 47 ist von dem ersten Lagergehäuse 27 umgeben. Die erste Lageraufnahme 81 ist dazu vorgesehen, eine Festlagerung zu bilden. Das erste Lagerungselement 47, 49 ist dazu vorgesehen, durch eine Wellenschulter einerseits und durch das Getriebeelement 77 andererseits in axialer Richtung angestellt bzw. vorgespannt zu werden.

Der Drehmomentübertragungsbereich 79 steht an dem zweiten Enden 73 in axialer Richtung gegenüber der Lagereinheit 25 einem zweiten Lagergehäuse 27 ab.

Der Drehmomentaufnahmebereich 79 weist ein Mitnahmeprofil auf, welches dazu vorgesehen ist, einen Formschluss für eine Drehmomentaufnahme zu bilden. Das Mitnahmeprofil ist dazu vorgesehen sein, ein Gegenmoment an der zweiten Seite der Antriebswelle 13b aufzubringen, um das Getriebeelement 77 mit der Antriebswelle 13b an dem ersten Ende 71 zu verbinden. Das Mitnahmeprofil weist einen Querschnitt, welches als ein Außensechskant ausgebildet ist.

Es wird weiter vorgeschlagen, dass der Drehmomentaufnahmebereich 79 in axialer Richtung an eine Lageraufnahme 83 zur Aufnahme des zweiten Lagerungselements 49 der Antriebseinheit 13 anschließt.

Der Drehmomentaufnahmebereich 79 weist eine Ausnehmung auf, welche dazu vorgesehen ist, ein Formschlusselement 55 für eine Drehmomentaufnahme zu bilden. Das Formschlusselement 55 ist dazu vorgesehen sein, ein Gegenmoment an der zweiten Seite der Antriebswelle 13b aufzubringen, um das Gewindeelement 80 mit der Antriebswelle 13b an der ersten Seite zu verbinden.

Der Drehmomentaufnahmebereich 79 begrenzt die Antriebswelle 13b in axialer Richtung entlang der Antriebsachse A.

Der Drehmomentaufnahmebereich 79 schließt an eine Lageraufnahme 81 zur Aufnahme eines Lagerungselements 49 der Antriebseinheit 13 an.

Die Lageraufnahme 83 ist von einem zweiten Lagergehäuse 27 umgeben. Die Lageraufnahme 83 ist dazu vorgesehen, eine Loslagerung zu bilden.

Das erste Ende 71 der Antriebswelle 13b das Gewindeelement 80 fliegend gelagert ist.

## Patentansprüche

1. Handwerkzeugmaschine, insbesondere Winkelschleifer, mit einer Antriebseinheit (13), mit einem Maschinengehäuse (15), mit einer Lagereinheit (25), insbesondere einem Lagergehäuse (27), zur Lagerung der Antriebseinheit (13) und mit einer Lufteinleitöffnung (61), welche dazu vorgesehen ist, einen Luftstrom (L1) derart zu leiten, dass ein Umfangsbereich (57) der Antriebseinheit (13) und/oder der Lagereinheit (27), insbesondere in axialer Richtung, umströmt wird, **dadurch gekennzeichnet, dass** die Lufteinleitöffnung (61), dazu vorgesehen ist, einen Luftstrom (L1) in radialer Richtung aus einem Umfangsbereich (57) der Antriebseinheit (13) anzusaugen.

2. Handwerkzeugmaschine nach einem der vorhergehenden Ansprüche, **dadurch gekennzeichnet, dass** die Antriebseinheit (13) derart an dem Maschinengehäuse (15) gelagert ist, dass ein Umfangsbereich (57) der Antriebseinheit (13) und/oder der Lagereinheit (27) von einem Luftstrom (L1), insbesondere in axialer Richtung, im Wesentlichen umströmbar ist.

3. Handwerkzeugmaschine nach einem der vorhergehenden Ansprüche, **dadurch gekennzeichnet, dass** die Lufteinleitöffnung (61) von der Lagereinheit (25) gebildet ist und sich insbesondere in Umfangsrichtung entlang der Lagereinheit (25) erstreckt.

4. Handwerkzeugmaschine nach einem der vorhergehenden Ansprüche, **dadurch gekennzeichnet, dass** die Lufteinleitöffnung (61) an einem Umfangsbereich (57) der Lagereinheit (25) angeordnet ist und sich in Umfangsrichtung entlang der Lagereinheit (25) erstreckt.

5. Handwerkzeugmaschine nach einem der vorhergehenden Ansprüche,
**gekennzeichnet durch** eine Getriebeeinheit (21), wobei die Lufteinleitöffnung (61) in axialer Richtung zwischen der Getriebeeinheit (21) und der Antriebseinheit (13), insbesondere einem Antriebsstator (13a), angeordnet ist.

6. Handwerkzeugmaschine nach einem der vorhergehenden Ansprüche,
**gekennzeichnet durch** eine Luftleitscheibe (63), insbesondere mit einer Luftleitausnehmung (65), welche dazu vorgesehen ist, den Luftstrom (L1) in axialer Richtung durch die Luftleitscheibe (63) zu leiten.

7. Handwerkzeugmaschine nach Anspruch 7, **dadurch gekennzeichnet, dass** die Luftleitscheibe (63) dazu vorgesehen ist, einen weiteren Luftstrom (L2) in den Luftstrom (L1) zu leiten und diese beiden Luftströme (L1, L2) zu verbinden.

8. Handwerkzeugmaschine nach einem der vorhergehenden Ansprüche, **dadurch gekennzeichnet, dass** die Lagereinheit (25) die Antriebseinheit (13), insbesondere einen Antriebsstator der Antriebseinheit (13), vorzugsweise vollständig, umgibt.

9. Handwerkzeugmaschine nach einem der vorhergehenden Ansprüche, **dadurch gekennzeichnet, dass** die Antriebseinheit (13), insbesondere der Antriebsstator der Antriebseinheit (13), an einem Umfangsbereich (57) bzw. an einer Mantelfläche einen Bereich aufweist, welcher nicht von der Lagereinheit (25), insbesondere dem Lagergehäuse (27), umgeben ist.

10. Handwerkzeugmaschine nach einem der Ansprüche 7 bis 10, **dadurch gekennzeichnet, dass** die Lagereinheit (25), insbesondere das Lagergehäuse (27), eine Luftausleitöffnung (65) aufweist, welche dazu vorgesehen ist, den Luftstrom (L1) und/oder den weiteren Luftstrom (L2) aus der Lagereinheit (25) heraus zu leiten.

11. Handwerkzeugmaschine nach einem der vorhergehenden Ansprüche, **dadurch gekennzeichnet, dass** die Lagereinheit (25) und/oder die Antriebseinheit (13) fliegend gelagert ist.

12. Handwerkzeugmaschine nach einem der vorhergehenden Ansprüche, **dadurch gekennzeichnet, dass** die Lagereinheit (25) in das erste Gehäuseteil (17) hineinragt.

## Claims

1. Hand-held power tool, in particular angle grinder, with a drive unit (13), with a machine housing (15), with a bearing unit (25), in particular a bearing housing (27), for mounting the drive unit (13) and with an air inlet opening (61) which is provided to conduct an air flow (L1) in such a way that a peripheral region (57) of the drive unit (13) and/or the bearing unit (27) is flowed around, in particular in the axial direction, **characterized in that** the air inlet opening (61) is provided for the intake of an air flow (L1) in the radial direction from a peripheral region (57) of the drive unit (13).

2. Hand-held power tool according to one of the preceding claims, **characterized in that** the drive unit (13) is mounted on the machine housing (15) in such a way that a peripheral region (57) of the drive unit (13) and/or the bearing unit (27) is flowed around substantially by an air flow (L1), in particular in the axial direction.

3. Hand-held power tool according to either of the preceding claims, **characterized in that** the air inlet opening (61) is formed by the bearing unit (25) and extends, in particular, in the peripheral direction along the bearing unit (25).

4. Hand-held power tool according to one of the preceding claims, **characterized in that** the air inlet opening (61) is arranged on a peripheral region (57) of the bearing unit (25) and extends in the peripheral direction along the bearing unit (25).

5. Hand-held power tool according to one of the preceding claims, **characterized by** a gear unit (21), wherein the air inlet opening (61) is arranged in the axial direction between the first gear unit (21) and the drive unit (13), in particular a drive stator (13a).

6. Hand-held power tool according to one of the preceding claims, **characterized by** an air guide plate (63), in particular with an air guide recess (65) which is provided for directing the air flow (L1) in the axial direction through the air guide plate (63).

7. Hand-held power tool according to Claim 7, **characterized in that** the air guide plate (63) is provided for directing a further air flow (L2) into the air flow (L1) and connecting these two air flows (L1, L2).

8. Hand-held power tool according to one of the preceding claims, **characterized in that** the bearing unit (25) surrounds the drive unit (13), in particular a drive stator of the drive unit (13), preferably completely.

9. Hand-held power tool according to one of the preceding claims, **characterized in that** the drive unit (13), in particular the drive stator of the drive unit (13), has a region on a peripheral region (57) or on a shell surface, which region is not surrounded by the bearing unit (25), in particular the bearing housing (27).

10. Hand-held power tool according to one of Claims 7 to 10, **characterized in that** the bearing unit (25), in particular the bearing housing (27), has an air outlet opening (65) which is provided for directing the air flow (L1) and/or the further air flow (L2) out of the bearing unit (25).

11. Hand-held power tool according to one of the preceding claims, **characterized in that** the bearing unit (25) and/or the drive unit (13) are/is cantilevermounted.

12. Hand-held power tool according to one of the preceding claims, **characterized in that** the bearing element (25) protrudes into the first housing part (17).

## Revendications

1. Machine-outil portative, notamment meuleuse d'angle, avec une unité d'entraînement (13), avec un boîtier de machine (15), avec une unité de palier (25), notamment un boîtier de palier (27), pour le montage de l'unité d'entraînement (13), et avec une ouverture d'admission d'air (61) qui est prévue pour diriger un flux d'air (L1) de telle sorte qu'une zone périphérique (57) de l'unité d'entraînement (13) et/ou de l'unité de palier (27) soit balayée par le flux, notamment dans la direction axiale, **caractérisée en ce que** l'ouverture d'admission d'air (61) est prévue pour aspirer un flux d'air (L1) dans la direction radiale à partir d'une zone périphérique (57) de l'unité d'entraînement (13).

2. Machine-outil portative selon l'une quelconque des revendications précédentes, **caractérisée en ce que** l'unité d'entraînement (13) est montée sur le boîtier de machine (15) de telle sorte qu'une zone périphérique (57) de l'unité d'entraînement (13) et/ou de l'unité de palier (27) puisse être essentiellement balayée par un flux d'air (L1), notamment dans la direction axiale.

3. Machine-outil portative selon l'une quelconque des revendications précédentes, **caractérisée en ce que** l'ouverture d'admission d'air (61) est formée par l'unité de palier (25) et s'étend notamment dans la direction périphérique le long de l'unité de palier (25).

4. Machine-outil portative selon l'une quelconque des revendications précédentes, **caractérisée en ce que** l'ouverture d'admission d'air (61) est agencée sur une zone périphérique (57) de l'unité de palier (25) et s'étend dans la direction périphérique le long de l'unité de palier (25).

5. Machine-outil portative selon l'une quelconque des revendications précédentes, **caractérisée par** une unité de transmission (21), l'ouverture d'admission d'air (61) étant agencée dans la direction axiale entre l'unité de transmission (21) et l'unité d'entraînement (13), notamment un stator d'entraînement (13a).

6. Machine-outil portative selon l'une quelconque des revendications précédentes, **caractérisée par** un disque de guidage d'air (63), notamment avec un évidement de guidage d'air (65), qui est prévu pour diriger le flux d'air (L1) dans la direction axiale à travers le disque de guidage d'air (63).

7. Machine-outil portative selon la revendication 7, **caractérisée en ce que** le disque de guidage d'air (63) est prévu pour guider un autre flux d'air (L2) dans le flux d'air (L1) et pour relier ces deux flux d'air (L1, L2).

8. Machine-outil portative selon l'une quelconque des revendications précédentes, **caractérisée en ce que** l'unité de palier (25) entoure l'unité d'entraînement (13), notamment un stator d'entraînement de l'unité d'entraînement (13), de préférence complètement.

9. Machine-outil portative selon l'une quelconque des revendications précédentes, **caractérisée en ce que** l'unité d'entraînement (13), notamment le stator d'entraînement de l'unité d'entraînement (13), présente, sur une zone périphérique (57) ou sur une surface d'enveloppe, une zone qui n'est pas entourée par l'unité de palier (25), notamment le boîtier de palier (27).

10. Machine-outil portative selon l'une quelconque des revendications 7 à 10, **caractérisée en ce que** l'unité de palier (25), notamment le boîtier de palier (27), présente une ouverture d'évacuation d'air (65) qui est prévue pour évacuer le flux d'air (L1) et/ou l'autre flux d'air (L2) hors de l'unité de palier (25).

11. Machine-outil portative selon l'une quelconque des revendications précédentes, **caractérisée en ce que** l'unité de palier (25) et/ou l'unité d'entraînement (13) est montée en porte-à-faux.

12. Machine-outil portative selon l'une quelconque des revendications précédentes, **caractérisée en ce que** l'unité de palier (25) pénètre dans la première partie de boîtier (17).
